# EUROPÄISCHE PATENTANMELDUNG

(11) **EP 1 661 447 A1**
(43) Veröffentlichungstag der Anmeldung: **31.05.2006**
(21) Anmeldenummer: 05025269.1
(22) Anmeldetag: 18.11.2005
(51) Int. Cl.: A01D 34/90

(54) **Rasentrimmer**

(30) Priorität: 25.11.2004 DE 102004056877
(71) Anmelder: MOGATEC Moderne Gartentechnik GmbH, 09435 Venusberg, OT Griessbach (DE)
(72) Erfinder: Melzer, Arnd, 09488 Thermalbad Wiesenbad OT Schönfeld (DE); Fiedler, Steffen, 09427 Ehrenfriedersdorf (DE)
(74) Vertreter: Neumann, Steffen

(57) **Zusammenfassung**

Die Erfindung betrifft einen Rasentrimmer, welcher im Wesentlichen aus einer verdrehbaren Handgriffanordnung und einem Schaft besteht, an dessen unterem Ende ein einen Motor mit einem zugeordneten Schneidkopf beinhaltendes und im Neigungswinkel gegenüber dem Schaft verstellbares Gehäuse angeordnet ist.

Während es Aufgabe der Erfindung ist, einen Rasentrimmer vorzuschlagen, bei dem die Handgriffanordnung auch dann einer Verdrehung unterzogen werden kann, wenn diese eine vom kreisförmigen Querschnitt abweichende Ausgestaltung aufweist, wobei weiterhin die Betätigungselemente für die Realisierung einer derartigen Verstellung und der Neigungswinkelverstellung des Schneidkopfes in einem unmittelbar benachbarten Zugriffsbereich ermöglicht werden soll, wird diese bei einem gattungsgemäßen Rasentrimmer dadurch gelöst, dass der Schaft (2) eine vom kreisförmigen Querschnitt abweichende Ausgestaltung aufweist und im Bereich seines dem Gehäuse (5) zugewandten Endes eine Trennebene (8) beinhaltet, die den Schaft (2) in einen separaten unteren Schaftteil (2") und einen separaten, zur Handgriffanordnung (3) führenden oberen Schaftteil (2') gliedert, wobei diese beiden Schaftteile (2', 2") einen Verbindungsbolzen (9) beinhalten, der im oberen Schaftteil (2') drehbar, aber axial lagegesichert gehalten ist, und dieser Verbindungsbolzen (9) ein hülsenförmiges, axial bewegbares und von einer Feder (10) in einer Blockierstellung vorgespanntes Arretierelement (11) aufnimmt, welches seitens des oberen Schaftteils (2') mindestens einen Vorsprung (12) aufweist, der mit einer zugehörigen Aussparung (13) im oberen Schaftteil (2') in oder außer Eingriff bringbar ausgestaltet ist sowie der gehäuseseitige Teil des Arretierelements (11) mit einer Nase (14) zur Aufnahme eines im unteren Schaftteil (2") gelagerten Betätigungselements (15) für die axiale Bewegbarkeit des Arretierelements (11) ausgebildet ist.

## Beschreibung

Die Erfindung betrifft einen Rasentrimmer, welcher im Wesentlichen aus einer verdrehbaren Handgriffanordnung und einem Schaft besteht, an dessen unterem Ende ein einen Motor mit einem zugeordneten Schneidkopf beinhaltendes und im Neigungswinkel gegenüber dem Schaft verstellbares Gehäuse angeordnet ist.

Derartige Rasentrimmer, die auch als Fadenschneider, Rasenkantenschneider oder Freischneider bezeichnet werden, finden ihre Verwendung als handgeführte Werkzeuge bei der Landschafts- und Gartenpflege, um insbesondere Pflanzen (= Schnittgut) an Standorten schneiden zu können, die mit herkömmlichen Geräten (z.B. Rasenmähern) schlecht zugänglich sind, objektiv nicht geschnitten (Rasenkanten) oder deren Anwendung sich aufgrund der Flächengröße nicht lohnt.

Ein solcher gattungsgemäßer Rasentrimmer ist aus der Bedienungsanleitung "Rasentrimmer - RT - 8502 u.a." der ikra GmbH, 064839 Münster / Altheim, bekannt. Bei diesem Rasentrimmer ist der Schaft als ein Rohr mit axial verteilten und jeweils gegenüberliegenden Rastausnehmungen sowie einer diesen zuordenbaren, federbelasteten und in der Handgriffanordnung gelagerten Rastschelle ausgestaltet, so dass deren Verriegelungsstift mit den Rastausnehmungen in unterschiedlichen Positionen an einen kreisförmigen Querschnitt beinhaltenden Schaft in Eingriff bringbar ist. Dadurch wird es einerseits möglich, die Handgriffanordnung um einen Winkel von 180° um die Längsachse des Schaftes zu drehen, wodurch dessen Lage zum Schneidkopf, insbesondere in Verbindung mit dessen gehäuseseitig zusätzlich vorgesehener Neigungswinkellverstellung zum Schaft, für das Schneiden von Rasenkanten eine entsprechende Anpassung erfahren kann. Andererseits wird die Möglichkeit eingeräumt, den Verriegelungsstift in weitere, axial am Rohr versetzte Rastausnehmungen in Eingriff zu bringen, wodurch die Schaftlänge der zu realisierenden Schneidaufgabe oder Größe der Bedienperson optimal angepasst werden kann.

Bei diesem Rasentrimmer kann somit auf einfache Weise die aus zwei Handgriffen gebildete Handgriffanordnung um einen Winkel von 180° um die Längsachse des rohrförmigen Schaftes verdreht werden. Demgegenüber ist diese Lösung dann nicht einsetzbar, wenn der Schaft eine vom kreisförmigen Querschnitt abweichende Ausgestaltung aufweist, was insbesondere aus ergonomischen und formgestalterischen Gründen als wünschenswert anzusehen wäre. Ein weiterer Nachteil besteht darin, dass die Verstellung der Handgriffanordnung und die Neigungswinkelverstellung des Schneidkopfes durch Handhabungen durchgeführt werden muss, bei denen die jeweiligen Betätigungselemente an entgegengesetzten und damit weit entfernten Stellen am Rasentrimmer angeordnet sind, wodurch sich die Handhabung als umständlich und erschwerend darstellt.

Aufgabe der vorliegenden Erfindung ist es, einen Rasentrimmer vorzuschlagen, bei dem die Handgriffanordnung auch dann einer Verdrehung unterzogen werden kann, wenn diese eine vom kreisförmigen Querschnitt abweichende Ausgestaltung aufweist, wobei weiterhin die Betätigungselemente für die Realisierung einer derartigen Verstellung und der Neigungswinkelverstellung des Schneidkopfes in einem unmittelbar benachbarten Zugriffsbereich ermöglicht werden soll.

Diese Aufgabe wird bei einem gattungsgemäßen Rasentrimmer durch die kennzeichnenden Merkmale des Patentanspruchs 1 gelöst.

Die Vorteile der Erfindung bestehen darin, dass eine Lösung zur Verfügung gestellt wird, mit der eine gemeinsame Verdrehbarkeit des Schaftes mit dem Schneidkopf gegenüber der Handgriffanordnung auch dann abgesichert werden kann, wenn der Schaft selbst keinen kreisförmigen Querschnitt aufweist. Außerdem werden die Voraussetzungen dafür geschaffen, dass die erforderlichen Handhabungen für die meist gemeinsam vorzunehmende Drehung der Handgriffanordnung gegenüber dem Gehäuse mit dem Schneidkopf und der Neigungswinkelverstellung des Schneidkopfes in Bezug auf den Schaft in einem unmittelbar benachbarten und oberhalb des Gehäuses befindlichen Bereich des Rasentrimmers auf einfache Weise erfolgen kann.

Vorteilhafte Weiterbildungen der Erfindung sind aus Patentansprüchen 2 bis 10 ersichtlich.

Durch die Merkmale der Patentansprüche 2 und 3 wird eine einfache Herstellbarkeit der Schaftteile und deren Zusammenfügung zum Schaft ermöglicht.

Die Ausgestaltung nach Patentanspruch 4 bewirkt, dass der Verbindungsbolzen mit geringem Aufwand im oberen Schaftteil gelagert und geführt werden kann.

Die Merkmale des Patentanspruchs 5 gewährleisten, dass eine einfache Kraftbeaufschlagung vorgenommen werden kann.

Durch die Merkmale des Patentanspruchs 6 wird eine wirksame und entfernungsnahe Lage des Verbindungsbolzens mit der Endhülse und damit auch des zugeordneten Betätigungselements erreicht.

Eine stabile Führung der Nase des Arretierelements in der Endhülse kann mit den Merkmalen nach Patentanspruch 7 abgesichert werden.

Die Merkmale des Patentanspruchs 8 ermöglichen eine wirksame Begrenzung des Verdrehwinkels zwischen den beiden Schaftteilen.

Demgegenüber sichern die Merkmale mit Bezug auf Patentanspruch 9 die erforderliche Längsbeweglichkeit des Arretierelements auf dem Verbindungsbolzen ab.

Letztlich wird durch die Merkmale des Patentanspruchs 10 ein einfach aufgebautes Betätigungselement für die Verdrehbarkeit zwischen den beiden Schaftteilen zur Verfügung gestellt.

Die Erfindung soll nachfolgend an einem Ausführungsbeispiel und zugehörigen Zeichnungen näher erläutert werden. Es zeigen:
- Fig. 1: eine perspektivische Ansicht des erfindungsgemäßen Rasentrimmers in einer ersten Arbeitsstellung
- Fig. 2: eine perspektivische Ansicht des Verbindungsbolzens des erfindungsgemäßen Rasentrimmers
- Fig. 3: eine perspektivische Ansicht des Arretierelements des erfindungsgemäßen Rasentrimmers
- Fig. 4: eine perspektivischen und teilweise aufgebrochene Ansicht des oberen Schaftteils des erfindungsgemäßen Rasentrimmers
- Fig. 5: eine perspektivische Ansicht des als Schieber ausgebildeten Betätigungselements des erfindungsgemäßen Rasentrimmers
- Fig. 6: eine perspektivische Ansicht der Endhülse des erfindungsgemäßen Rasentrimmers
- Fig. 7: eine perspektivischen Ansicht des unteren Schaftteils des erfindungsgemäßen Rasentrimmers
- Fig. 8: einen Längsschnitt des erfindungsgemäßen Rasentrimmers
- Fig. 9: eine perspektivische Ansicht des erfindungsgemäßen Rasentrimmers in einer abgewandelten zweiten Arbeitsstellung

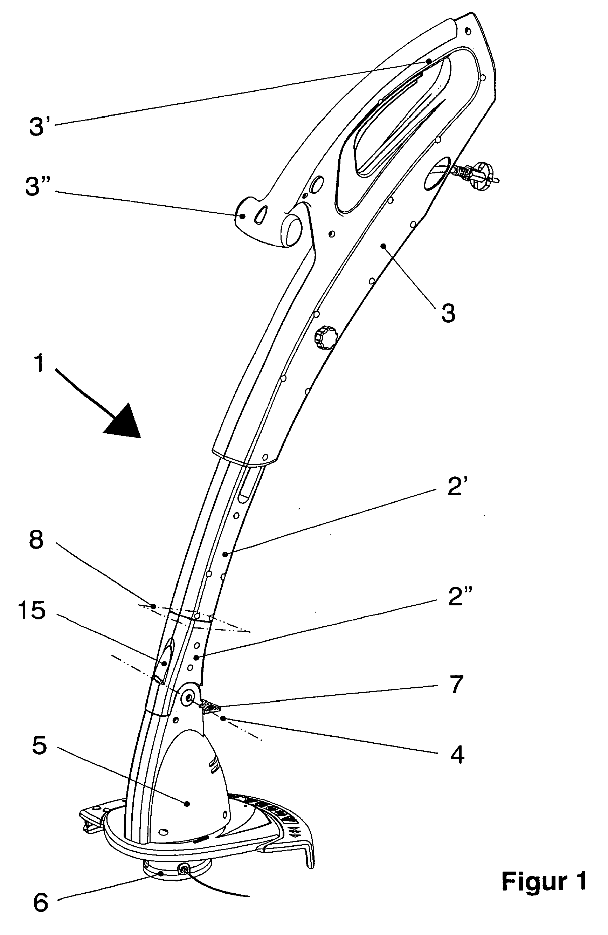

In der Fig. 1 ist ein Rasentrimmer 1 dargestellt. Dieser besteht aus einem Schaft 2, der in einem separaten oberen Schaftteil 2' und einem separaten unteren Schaftteil 2" unterteilt ist. Am Ende des oberen Schaftteils 2' ist eine aus zwei Handgriffen 3', 3" gebildete Handgriffanordnung 3 vorgesehen, während am Ende des unteren Schaftteils 2" ein im Neigungswinkel gegenüber den Schaftteilen 2', 2" um eine horizontale Achse 4 verstellbares Gehäuse 5 angeordnet ist, welches einen in der Fig. 1 nicht dargestellten Motor, vorzugsweise einen Elektromotor, mit einem zugeordneten Schneidkopf 6 aufnimmt. Dazu ist ein entsprechendes Betätigungselement 7 im Gehäuse gelagert.

Beide Schaftteile 2', 2" setzen sich aus jeweils zwei Halbschalen zusammen, die miteinander verbunden sind.

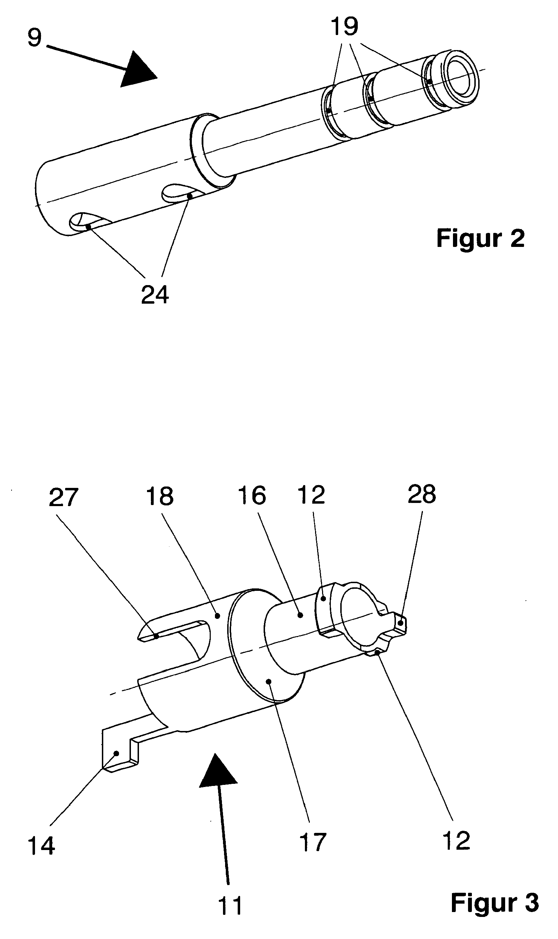

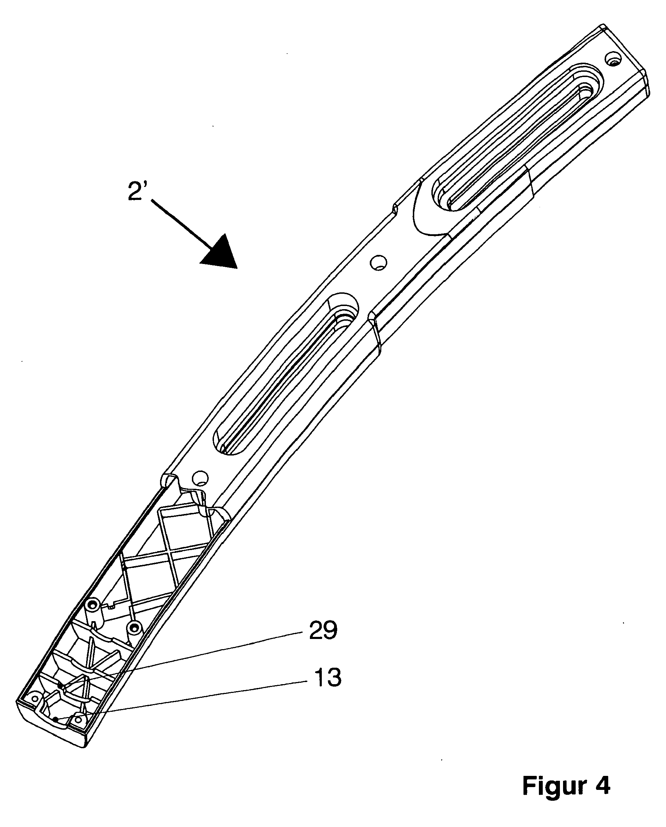

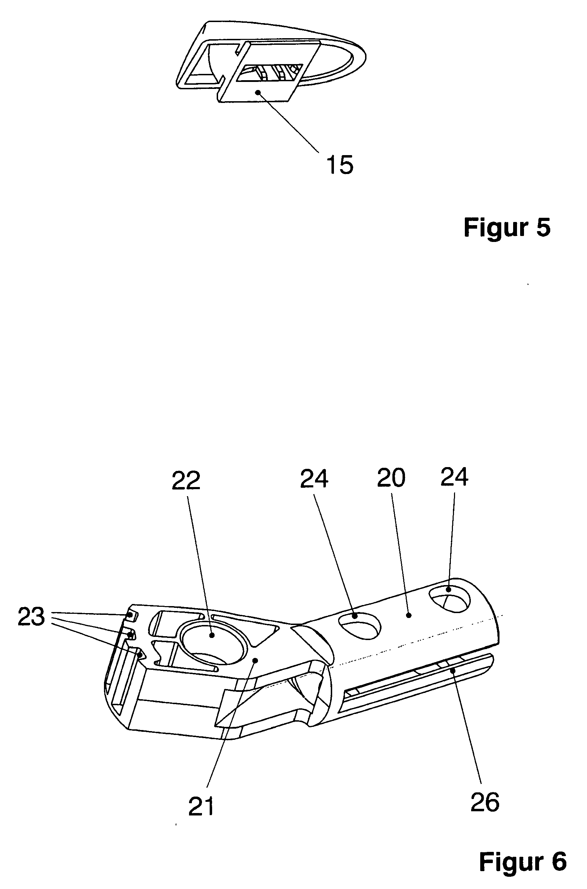

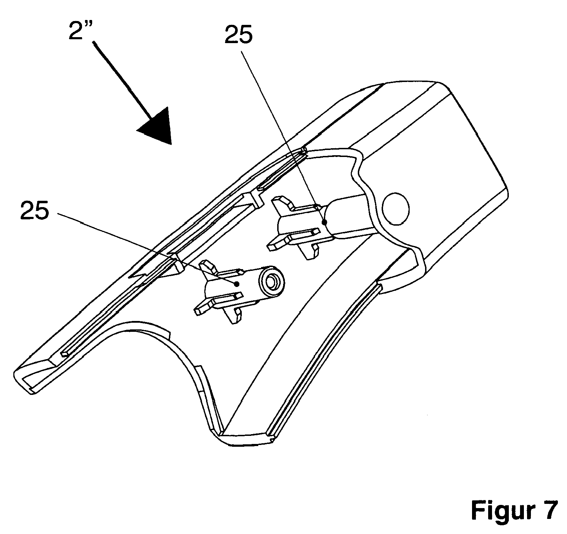

Die Schaftteile 2', 2" weisen eine vom kreisförmigen Querschnitt abweichende Ausgestaltung, beispielsweise einen im Wesentlichen rechteckigen oder quadratischen Querschnitt, auf und bilden im Bereich ihrer einander zugewandten Enden eine Trennebene 8. Dabei sind beide Schaftteile 2', 2" mittels eines in den Schaftteilen 2', 2" drehbar gelagerten, aber axial lagegesicherten Verbindungsbolzens 9 (Fig. 2) verbunden, wobei der Verbindungsbolzen 9 ein hülsenförmiges, axial bewegbares und von einer als Druckfeder ausgestalteten Feder 10 in einer Blockierstellung vorgespanntes Arretierelement 11 (Fig. 3) aufnimmt, welches seitens des oberen Schaftteils 2' zwei Vorsprünge 12 aufweist, die mit zugehörigen Aussparungen 13 (Fig. 4) im oberen Schaftteil 2' in oder außer Eingriff bringbar ausgestaltet sind. Außerdem ist der gehäuseseitige Teil des Arretierelements 11 mit einer Nase 14 zur Aufnahme eines im unteren Schaftteil 2" gelagerten und als Schieber ausgeführten Betätigungselements 15 (Fig. 5) zur axialen Bewegbarkeit des Arretierelements 11 vorsehen. Dabei ist die Feder 10 am Umfang eines durchmessergeringen Abschnitts 16 des Arretierelements 11 zwischen dem unteren Schafteil 2" und der Planseite 17 am Übergang zu einem durchmessergrößeren Abschnitt 18 des Arretierelements 11 gehalten. Zur Realisierung eines formschlüssigen Eingriffs des Verbindungsbolzens 9 in das obere Schaftteil 2' ist dieser mit mindestens einer Ausnehmung 19 ausgestattet. Gehäuseseitig nimmt der Verbindungsbolzen .9 eine Endhülse 20 auf, die einen gehäuseseitigen Fortsatz 21 beinhaltet, in dem die Achsbohrung 22 zur Aufnahme der Achse 4 und die Rastaussparungen 23 für die Neigungswinkelverstellung des Schneidkopfes 6 vorgesehen sind (Fig. 6), wobei der Verbindungsbolzen 9 und die Endhülse 20 mindestens eine Querbohrung 24 aufweisen, mit welcher diese formschlüssig auf mindestens einem im unteren Schaftteil 2" vorgesehenen Querbolzen 25 (Fig. 7) gehalten werden. Außerdem ist in die Endhülse 20 eine in Längsrichtung verlaufende Aussparung 26 eingebracht, die als Führung für die Nase 14 des Arretierelements 11 dient. Zur Sicherung seiner Längsbeweglichkeit weist das hülsenförmige Arretierelement 11 im Bereich der sich überdeckenden Querbohrungen 24 des Arretierbolzens 9 und der Endhülse 20 einander gegenüberliegende und einseitig offene Langlöcher 27 auf. Letztlich ist es zur Vermeidung von Kabelverdrehungen erforderlich, den Verdrehwinkel des unteren Schaftteils 2" gegenüber dem oberen Schaftteil 2' auf 180° zu begrenzen. Dies wird dadurch abgesichert, dass einer der Vorsprünge 12 des Arretierelements 11 eine Anschlagnase 28 beinhaltet, die mit einer Anschlagfläche 29 im oberen Schaftteil 2' zusammenwirkt.

Die Funktionsweise der Vorrichtung soll nachfolgend beschrieben werden:

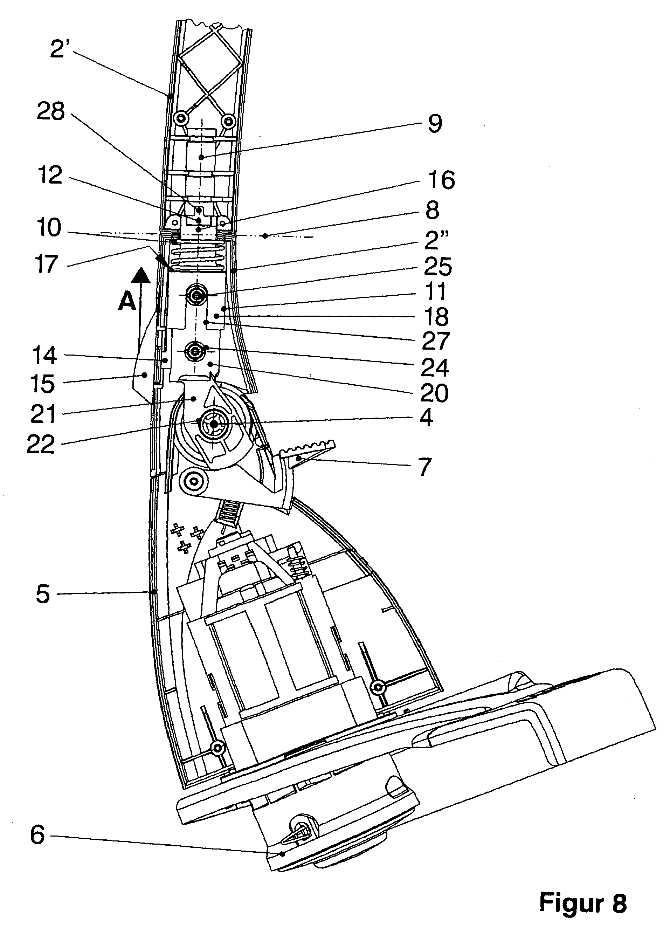

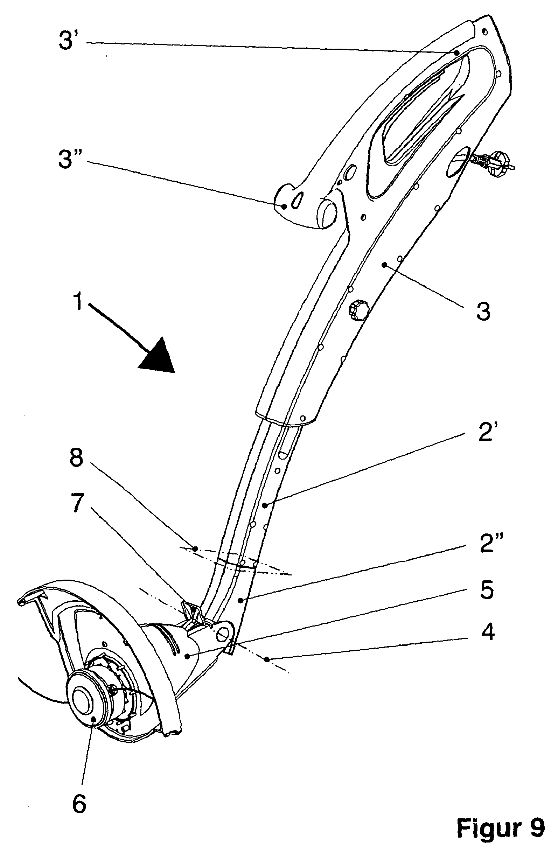

Macht sich ausgehend von der in Fig. 8 gezeigten Stellung, bei der die Schaftteile 2', 2" starr durch Formschluss zwischen den Vorsprüngen 12 des Arretierelements 11 mit den zugeordneten Aussparungen 13 im oberen Schaftteil 2' verbunden sind, eine Drehung des Gehäuses 5 einschließlich Motor und Schneidkopf 6 gegenüber dem oberen Schaftteil 2' mit der Griffanordnung 3 erforderlich, so wird mittels des im Gehäuse 5 geführten und als Schieber ausgebildeten Betätigungselements 15 das Arretierelement 11 entgegen der Kraft der Feder 10 in Richtung des Pfeiles A axial auf dem Verbindungsbolzen 9 verschoben. Dadurch gelangen die Vorsprünge 12 des Arretierelements 11 außer Eingriff mit den Aussparungen 13 im oberen Schaftteil 2', wodurch nunmehr in der Trennebene 8 der untere Schafteil 2" in Bezug auf den oberen Schafteil 2' um einen Winkel von 180° gedreht werden kann, wobei diese Drehverstellung durch die Anschlagnase 28 des Arretierelements 11 in Verbindung mit der Anschlagfläche 29 im oberen Schaftteil 2' begrenzt wird. Nach Entlastung des Betätigungselements 15 und unterstützt von der vorgespannten Feder 10 gelangen in dieser Position die Vorsprünge 12 des Arretierelements 11 erneut in Eingriff mit den Aussparungen 13 im oberen Schaftteil 2', wodurch die starre Verbindung der beiden Schaftteile 2', 2" in zueinander verdrehter Stellung wiederholt herbeigeführt wird. Nachfolgend wird durch die Auslösung des im Gehäuse 5 gelagerten Betätigungselements 7, welches im unmittelbaren Zugriffsbereich des Betätigungselements 15 liegt, und dem dadurch aufgehobenen Eingriff mit einer der Rastaussparungen 23 am Fortsatz 21 der Endhülse 20, der Schneidkopf 6 um die horizontale Achse 4 verstellt und somit dessen Neigungswinkel gegenüber den Schaftteilen 2', 2" zur Anpassung des Rasentrimmers 1 an die veränderte Arbeitsaufgabe realisiert. Dabei nimmt die Griffanordnung 3 des Rasentrimmers 1 nunmehr die in der Fig. 9 gezeigte Stellung gegenüber dem Gehäuse 6 mit Motor und Schneidkopf 7 ein.

### Bezugszeichenliste

- 1: Rasentrimmer
- 2: Schaft
- 2': oberer Schaftteil
- 2": unterer Schaftteil
- 3: Handgriffanordnung
- 3': Handgriff
- 3": Handgriff
- 4: horizontale Achse
- 5: Gehäuse
- 6: Schneidkopf
- 7: Betätigungselement
- 8: Trennebene
- 9: Verbindungsbolzen
- 10: Feder
- 11: Arretierelement
- 12: Vorsprung
- 13: Aussparung
- 14: Nase
- 15: Betätigungselement
- 16: durchmessergeringer Abschnitt
- 17: Planseite
- 18: durchmessergrößerer Abschnitt
- 19: Ausnehmung
- 20: Endhülse
- 21: Fortsatz
- 22: Achsbohrung
- 23: Rastaussparung
- 24: Querbohrung
- 25: Querbolzen
- 26: Aussparung
- 27: Langloch
- 28: Anschlagnase
- 29: Anschlagfläche

## Patentansprüche

1. Rasentrimmer, welcher im Wesentlichen aus einer verdrehbaren Handgriffanordnung und einem Schaft besteht, an dessen unterem Ende ein einen Motor mit einem zugeordneten Schneidkopf beinhaltendes und im Neigungswinkel gegenüber dem Schaft verstellbares Gehäuse angeordnet ist,
**dadurch gekennzeichnet,**
**dass** der Schaft (2) eine vom kreisförmigen Querschnitt abweichende Ausgestaltung aufweist und im Bereich seines dem Gehäuse (5) zugewandten Endes eine Trennebene (8) beinhaltet, die den Schaft (2) in einen separaten unteren Schaftteil (2") und einen separaten, zur Handgriffanordnung (3) führenden oberen Schaftteil (2') gliedert, wobei diese beiden Schaftteile (2', 2") einen Verbindungsbolzen (9) beinhalten, der im oberen Schaftteil (2') drehbar, aber axial lagegesichert gehalten ist, und dieser Verbindungsbolzen (9) ein hülsenförmiges, axial bewegbares und von einer Feder (10) in einer Blockierstellung vorgespanntes Arretierelement (11) aufnimmt, welches seitens des oberen Schaftteils (2') mindestens einen Vorsprung (12) aufweist, der mit einer zugehörigen Aussparung (13) im oberen Schaftteil (2') in oder außer Eingriff bringbar ausgestaltet ist sowie der gehäuseseitige Teil des Arretierelements (11) mit einer Nase (14) zur Aufnahme eines im unteren Schaftteil (2") gelagerten Betätigungselements (15) für die axiale Bewegbarkeit des Arretierelements (11) ausgebildet ist.

2. Rasentrimmer nach Patentanspruch 1,
**dadurch gekennzeichnet,**
**dass** der Schaft (2) einen im Wesentlichen rechteckigen oder quadratischen Querschnitt aufweist.

3. Rasentrimmer nach Patentanspruch 1,
**dadurch gekennzeichnet,**
**dass** die Schaftteile (2', 2") als Halbschalen ausgestaltet sind.

4. Rasentrimmer nach Patentanspruch 1,
**dadurch gekennzeichnet,**
**dass** der Verbindungsbolzen (9) mindestens eine Ausnehmung (19) aufweist, mit der er formschlüssig in das obere Schaftteil (2') eingreifbar ausgebildet ist.

5. Rasentrimmer nach Patentanspruch 1,
**dadurch gekennzeichnet,**
**dass** die Feder (10) als Druckfeder ausgeführt und am Umfang eines durchmessergeringen Abschnitts (16) des Arretierelements (11) zwischen dem unteren Schafteil (2") und einer Planseite (17) am Übergang zu einem durchmessergrößeren Abschnitt (18) des Arretierelements (11) angeordnet ist.

6. Rasentrimmer nach Patentanspruch 1,
**dadurch gekennzeichnet,**
**dass** der Verbindungsbolzen (9) gehäuseseitig eine Endhülse (20) aufnimmt, die einen gehäuseseitigen Fortsatz (21) beinhaltet, in dem eine Achsbohrung (22) zur Aufnahme einer horizontalen Achse (4) und Rastaussparungen (23) für die Neigungswinkelverstellung des Schneidkopfes (6) vorgesehen sind, wobei der Verbindungsbolzen (9) und die Endhülse (20) mindestens eine Querbohrung (24) aufweisen, mit der diese formschlüssig auf mindestens einem im unteren Schaftteil (2") vorgesehenen Querbolzen (25) gehalten sind.

7. Rasentrimmer nach Patentanspruch 1,
**dadurch gekennzeichnet,**
**dass** die Nase (14) in einer als Führung dienenden Aussparung (26) in der Endhülse (20) angeordnet ist.

8. Rasentrimmer nach Patentanspruch 1,
**dadurch gekennzeichnet,**
**dass** einer der Vorsprünge (12) des Arretierelements (11) eine Anschlagnase (28) beinhaltet, die mit einer Anschlagfläche (29) im oberen Schaftteil (2') zusammenwirkt.

9. Rasentrimmer nach Patentanspruch 1,
**dadurch gekennzeichnet,**
**dass** das hülsenförmige Arretierelement (11) im Bereich der sich überdeckenden Querbohrungen (24) des Verbindungsbolzens (9) und der Endhülse (20) mit einander gegenüberliegenden und einseitig offenen Langlöchern (27) versehen ist.

10. Rasentrimmer nach Patentanspruch 1,
**dadurch gekennzeichnet,**
**dass** das Betätigungselement (15) als Schieber ausgestaltet ist.
